# NEUE EUROPÄISCHE PATENTSCHRIFT

(11) **EP 0 891 691 B2**
(45) Veröffentlichungstag und Bekanntmachung des Hinweises auf die Entscheidung über den Einspruch: **22.08.2007**
(45) Hinweis auf die Patenterteilung: 09.10.2002
(21) Anmeldenummer: 98111057.0
(22) Anmeldetag: 17.06.1998
(51) Int. Cl.: A01C 5/06, A01C 7/20

(54) **Sägerät mit einem Scheibensäschar**
Seeddrill with disc coulter
Semoir à soc à disque

(30) Priorität: 18.07.1997 DE 19730822
(43) Veröffentlichungstag der Anmeldung: 20.01.1999
(73) Patentinhaber: Güttler, Fritz, D-73235 Weilheim (DE)
(72) Erfinder: Güttler, Fritz, D-73235 Weilheim (DE)
(74) Vertreter: Patentanwälte Ruff, Wilhelm, Beier, Dauster & Partner

(56) Entgegenhaltungen:
- EP-A- 0 677 239
- CA-A- 1 127 012
- CA-A- 2 144 565
- DE-A- 2 050 146
- DE-A- 3 418 176
- DE-A- 4 310 498
- FR-A- 391 347
- GB-A- 2 011 236
- US-A- 1 001 920
- US-A- 1 054 235
- US-A- 2 647 805
- US-A- 4 116 140
- US-A- 5 458 203

## Beschreibung

Die Erfindung betrifft ein Sägerät mit einem Scheibensäschar, das unter einem sich nach oben öffnenden Vertikalwinkel und unter einem Horizontalwinkel zu einer parallel zur Fahrtrichtung liegenden Vertikalebene angestellt ist nach dem Oberbegriff des Patentanspruches 1.

Ein Sägerät dieser Art ist aus der FR 391 347 A bekannt. Dort ist eine Einrichtung mit mehreren nebeneinander angeordneten Säscharen gezeigt, bei der das Säschar jeweils aus einer relativ stark gewölbten Scheibe besteht. Diese gewölbte Scheibe soll jeweils zu einer parallel zur Fahrtrichtung liegenden Vertikalebene unter einem Horizontalwinkel und im übrigen unter einem sich nach oben öffnenden Vertikalwinkel angestellt werden, wobei durch diese Ausrichtung der Scheibe ein Abheben und ein Bewegen der Erde zum Zweck geschehen soll, dass in die durch das Anheben der Erde entstehende Rinne die Samen eingeführt werden können, wonach die aufgeworfene Erde wieder zurück fällt und die eingeleiteten Samen abdeckt.

Aus der DE 34 18 176 C2 ist eine planebene Scheibe bekannt, die an einem gleichzeitig als Saatleitungsrohr ausgebildeten Haltearm drehbar angeordnet ist, so an diesem Arm ausgerichtet, dass die Ebene der planen Scheibensäschar um einen Winkel zwischen 5-10° schräg nach außen gekippt gegenüber einer Vertikalebene und um einen Winkel in der gleichen Größenordnung auch in der Fahrtrichtung um einen horizontal gemessenen Winkel angestellt ist. Um eine Tiefenbegrenzung zu erreichen, ist auf der von der Mündung eines Saatzuführungsrohres und der Halterung abgewandten, nach außen gekippten und gegen die Fahrtrichtung geneigten Außenseite der planen Scheibe ein zylindrischer Stützring angeformt, der auch als Felge zur Aufnahme eines Hohlgummireifens dienen kann. Dieser Stützring oder ein darauf montierter Hohlreifen drückt im Wirkbereich der Scheibensäschar jedoch auf den Boden und verfestigt diesen zum Teil schon in dem Bereich, in dem die Furchenbildung eintritt. Das Erdreich wird bei solchen Einrichtungen daher nicht, oder jedenfalls nicht vollständig, wieder die gebildete Saatfurche abdecken, so dass nachgeschaltete Aggregate zum Schließen und Einebnen der Saatfurche notwendig sind. Am Übergang des kleineren zylindrischen Stützringes zum größeren Scheibensäschar klebt Feuchterde ringartig an und zwingt das Scheibensäschar aus dem Boden-Tiefeneingriff. Diese bekannte Einrichtung ist zur Direktsaat, d.h. in nicht vorbereiteten Böden, die auch noch mit Pflanzenresten besetzt sein können, nicht tauglich, weil der stumpfe Scheibenumfang nicht in den festliegenden Boden eingreifen kann. Auch die Zugpunktlage kann das nicht bewirken. Es muss das Feld Saatbett-bereitet sein.

Der als Saatleitungsrohr ausgebildete Halter liegt auf der vom Stützring abgewandten Seite der planen Scheibe und ein Leitblech für das Saatgut reicht bis in den untersten Bereich der Umfangskante der Scheibe.

Bekannt ist auch eine Drillmaschine (DE 3 345 394 C1 ) bei der mehrere, jeweils in Querreihen hintereinander und auf Lücke angeordnete plane Scheibensäschare unter einem Winkel zur Fahrtrichtung angestellt sind.

Aus der DE 42 37 093 A1 ist eine Direktsämaschine bekannt geworden, die sowohl mit Scharmeißeln als auch mit Scheibenscharen arbeiten kann, wobei die Ausbildung so getroffen ist, dass die Scharmeißel gegen Scheibenschare leicht auswechselbar sind. Diese Auswechslung gegen Scheibenschare wird vorgenommen, wenn Böden besät werden sollen, auf deren Bodenoberfläche, oder in deren oberster Bodenschicht, große Pflanzenmassen eingearbeitet sind, die zu einer Verstopfung führen könnten, wenn mit Scharmeißeln gearbeitet wird.

Bei dieser Direktsämaschine ist auch eine Ausführungsform vorgesehen, bei der eine plane, die Scheibensäschar bildende Scheibe unter einem Horizontalwinkel zu einer in der Fahrtrichtung liegenden Vertikalebene angeordnet ist. Diesem Scheibensäschar ist eine zweite, kleinere Säschar zugeordnet, die derartig angeordnet ist, dass sie praktisch im Schatten der anderen Scheibe liegt, so dass die Säfurche nur von der einen angestellten Scheibe gebildet wird. Auch solche Säeinrichtungen bedürfen einer nachlaufenden Druckrolle, die auch mit elastischen Zinken versehen sein kann. Diese Nachlaufrolle wird versetzt zu der Säschar angeordnet und dient dazu, die mit dem Saatgut versehene Furche zu schließen und den Boden festzudrücken.

Aus der DE 40 07 783 ist eine Sämaschine bekannt, bei der man die Saatgutauslassöffnungen im Umlaufbereich der Scheiben einer Scheibenegge angeordnet hat. Hier ist jedoch mit feststehenden zu mehreren auf einer gemeinsamen Achse befestigten Säscharen zu arbeiten, die bei Direktsaat, insbesondere bei mit Pflanzenrückständen versehenen Böden, wegen der generell unebenen Bodenoberfläche schwer einzusetzen sind und die Säfurchentiefe sich nicht einmal annähernd in der pflanzengerechten Art und Weise führen und noch weniger halten lässt.

Aus der DE-PS 2 050 146 schließlich ist es auch bekannt, zum Verteilen von streubarem Saatgut, Säschare in der Form von topfförmig geprägten Scheiben vorzusehen, die jeweils paarweise einander so zugeordnet sind, dass die durch ihre Laufkränze gelegten Ebenen unter einem in der Fahrtrichtung offenen Winkel zu einer in Fahrtrichtung liegenden Vertikalebene, und auch unter einem sich nach oben öffnenden Winkel zu dieser Vertikalebene angeordnet sind. Dabei ist man davon ausgegangen, dass die auf die einzelnen Scheiben wirkenden Kräfte sich weitgehend gegenseitig aufheben. Das Saatgut selbst wird den Außenseiten der Scheiben zugeleitet und es ist in einer zweiten Reihe von Scheibensäscharen gleicher Ausgestaltung dafür gesorgt, dass eine weitere Saatgutablage jeweils in den Zwischenräumen der zunächst gelegten Saatfurchen stattfinden kann, wobei die von der ersten Reihe gelegten Saatreihen vom seitwärts geförderten Boden aus der zweiten Reihe unzulässig hoch bedeckt und begraben werden.

Bei Vorrichtungen zur Bodenbearbeitung schließlich ist es auch bekannt (DE 690 08 119 T2), gewölbte Scheiben als Scheibeneggen zu verwenden, deren Umfang gezackt ist. Diese Scheiben werden zur Bodenbearbeitung in der Fahrtrichtung unter einem sich in Fahrtrichtung öffnenden Winkel zur Fahrtrichtung angestellt.

Der vorliegenden Erfindung liegt die Aufgabe zugrunde, ein Sägerät der eingangs genannten Art so auszugestalten, dass ein Einsatz nicht nur für die Direktsaat, sondern auch für alle drei der heute bekannten und praktizierten Säverfahren, also außer für die Direktsaat, auch für die konventionelle Saat, in gepflügtem und saatbettbereitetem Acker und für die sogenannte Mulchsaat eingesetzt werden kann, bei der mehr oder weniger große Pflanzenmassen, z.B. vom Mähdrescher gehäckseltes Mais- oder Getreidestroh, Zwischenfrucht-Pflanzen, Rübenblätter, Kartoffelkraut o.dgl., in den Boden eingemischt sind.
Diese Aufgabe wird erfindungsgemäß bei einem Sägerät der eingangs genannten Art durch die kennzeichnenden Merkmale des Patentanspruchs 1 gelöst.

Durch diese Ausgestaltung gelingt es in sehr einfacher Weise, das Scheibensäschar ohne eine Kombination mit einem gegenläufig ausgerichteten Scheibensäschar in einer bestimmten Bearbeitungshöhe zu halten, wobei die konkav gewölbte Innenseite der Scheibe den Boden so anhebt, dass für das auf der konvexen Seite zugeführte Saatgut eine Säfurche entsteht, die aber bei mäßigem Arbeitstempo von etwa 6-7km/h, unmittelbar nach dem Einsävorgang sich wieder durch den nur angehobenen, aber nicht zur Seite gedrückten Boden schließt, während bei forciertem Tempo der aus der Säfurche gehobene Boden schleierartig seitwärts bis über die benachbarte hinwegfließt und deren eingelegte Saatkörner dünn überdeckt, was ideale Keimbedingung ist. Diese Wirkungsweise, die eine Saat für alle drei vorher erwähnten Saatvorgänge ermöglicht hat, ist verblüffend und lässt sich auf die Kombination der Merkmale der Erfindung zurückführen und auf die Erkenntnis, dass eine gewölbte Scheibe, wenn sie nach der Erfindung ausgerichtet ist, den Boden aufschneidet, zum einen wegen ihrer Winkeleinstellung die gewünschte Saatfurche anlegt und die Möglichkeit der Saatgutablage durch das auf der konvexen Seite zugeführte Saatgut gibt, zum anderen aufgrund ihrer Anstellung und Ausgestaltung die geöffnete Saatfurche wieder schließt, und insbesondere zu keinen Verstopfungen neigt, zu deren Behebung möglicherweise Abstreifer oder andere Einrichtungen, wie zusätzliche Scheiben, vorgesehen werden müssen.

Weil die Wölbung der Scheibe und der Anstellwinkel so aufeinander abgestimmt sind, dass eine am Umfang der Scheibe radial verlaufende Tangente in etwa in der Fahrtrichtung liegt, steht der vordere Schneidrand der Scheibe annähernd parallel zur Arbeitsrichtung im Bodeneingriff und trennt deshalb wie ein Skalpell im leichtzügigsten Schnitt die Saatrille, ohne Bodenverpatzungen auf, durchtrennt mit Leichtigkeit angewurzelte Pflanzenteile, greift lose liegende Teile, z.B. zähes Strohhäcksel zusammen mit dem aus den Saatrillenquerschnitt brechenden Bodenteilen auf und legt es seitwärts ab. Es ist auf diese Weise vorteilhaft vermieden, dass auf dem Saatrillengrund Keimschäden verursachende Strohteile liegen, oder gar, wie es bei mit Säscheiben bestückten anderen Direktsämaschinen bekannt ist, obenauf liegendes Zähstroh in die Särille hereingezogen wird, so dass die Samenkörner darauf zu liegen kommen und stark keimschädengefährdet sind.

Gleichzeitig wird aber auch der aus der zu öffnenden Saatrille geschnittene Bodenbalken von den nachfolgenden Bodenpartien durch die Konkavbogenbahn hinweggeschoben. Durch die dadurch eintretende Richtungsänderung wird der ausgehobene Bodenbalken auch in sehr feuchtem Zustand krümelnd aufgebrochen. Auch die zum Bodeneinzug der neuen Säscheibe benötigte Federdruckkraft beträgt nur einen Bruchteil dessen, wie es bei bekannten Direktsämaschinen erforderlich ist dies ist bedingt dadurch, dass die gewölbte Säscheibe auch unter einem Neigungswinkel angestellt ist. Sie zieht sich dadurch jedenfalls zum Teil selbst in den Boden ein, bis die Tiefenbegrenzung wirksam wird. Daraus resultiert zum einen die Leichtzügigkeit, zum anderen aber auch der geringe Scheibenverschleiß, sowie eine mögliche Gewichtseinsparung für das Maschinenrahmengestell. Es wird eine Leichtbauweise möglich.

Gemäß der Erfindung ist die Scheibe kalottenförmig ausgebildet und hat die Form einer Kugelkalotte und ein Verhältnis von Bombierungstiefe zu Scheibendurchmesser von 1 : 20 bis 1:50. Es ergibt sich dadurch eine relativ flach gewölbte Scheibe, die ohne Probleme erfindungsgemäß angestellt werden kann. Vorteilhaft hat sich beispielsweise eine Scheibe von 330mm Durchmesser und mit einer Bombierungstiefe von 13,5mm erwiesen. Solche Scheiben können dann auch im Vergleich zu bekannten planen oder gewölbten Scheiben von Direktsämaschinen relativ klein gehalten werden.

Weitere Merkmale und Vorteile ergeben sich aus den Unteransprüchen, wobei zweckmäßig eine auf den Zugholm einwirkende Federdruckanordnung vorgesehen wird und jeder einzelnen Scheibe individuell eine Tiefenbegrenzungseinrichtung zugeordnet ist. Der Anstellwinkel und der Neigungswinkel können in der Größenordnung zwischen 10° und 30° liegen und es kann vorgesehen werden, dass diese Winkel durch entsprechende Lagerung der Scheibe wahlweise eingestellt werden.

Der Scheibe kann in Weiterbildung der Erfindung eine ihre Arbeitsspur tangierende Räumrolle nachgeschaltet sein, die an einem vertikal schwenkbar am hinteren Ende des Zugholmes gelagerten Ausleger angeordnet ist. Diese Räumrolle kann in Weiterbildung der Erfindung über eine Federdruckvorrichtung belastet sein, die am kleineren Hebelarm eines Winkelhebels angreift, der auf der Achse der Räumrolle schwenkbar gelagert ist und mit seinem freien Ende des längeren Hebelarmes an dem Zugholm der Scheibe angelenkt ist. Diese Ausgestaltung bringt den Vorteil mit sich, dass insbesondere dann, wenn eine mit einem konischen und pultdachförmig nach einer Seite abfallenden Laufkranz versehene Räumrolle vorgesehen ist, dann, wenn ein eventuell notwendiges Zurücksetzen der Zug- bzw. Arbeitsmaschine mit versehentlich im Bodeneingriff belassenem Säaggregat eintritt, durch die Kinematik und der Druckfederabstützung der Hebelarm so verschwenkt wird, dass die gewölbte Scheibensäschar über ihren Zugholm angehoben wird, so dass sie aus dem Bodeneingriff kommt und der Saatleitungsaustritt nicht verstopfen kann.

Die Erfindung ist in der Zeichnung anhand von verschiedenen Ausführungsbeispielen dargestellt und wird im folgenden beschrieben. Es zeigen:
- Fig. 1: eine schematische Seitenansicht eines erfindungsgemäßen Scheibensäschares, das mit einer Gleitkufe zur Tiefenbegrenzung kombiniert ist,
- Fig. 1a: den schematischen Schnitt durch die Säscheibe der Fig. 1 längs der Schnittlinie 1a,
- Fig. 2: die Draufsicht auf das Scheibensäschar der Fig. 1 in Richtung des Pfeiles II gesehen,
- Fig. 3: die Ansicht des Scheibensäschares von hinten in Richtung des Pfeiles III gesehen, wobei die Aufhängung und die Tiefenbegrenzungskufe nicht gezeigt ist,
- Fig. 4: eine Seitenansicht eines erfindungsgemäßen Scheibensäschares mit einer Tiefenbegrenzungsrolle,
- Fig. 5: die Draufsicht auf die Ausführungsform nach Fig. 4,
- Fig. 6: die Ansicht der Ausführungsform der Fig. 4 ähnlich Fig. 3 von hinten gesehen,
- Fig. 7: eine erfindungsgemäße Scheibensäeinrichtung, bei der der Zugholm als Parallelogrammlenker ausgebildet ist,
- Fig. 8: die Ansicht der Ausführungsform der Fig. 7 in Richtung des Pfeiles VII gesehen,
- Fig. 9: eine Darstellung ähnlich Fig. 8, jedoch ohne Tiefenbegrenzungseinrichtung und Saatleitungsrohr und nur zur Darstellung der Einstellmöglichkeiten bezüglich des Anstell- und des Neigungswinkels,
- Fig. 9a: die schematische Darstellung einer weiteren Ausführungsform für die Sävorrichtung nach der Erfindung,
- Fig. 10: eine erfindungsgemäße Scheibensävorrichtung mit einer dem Scheibensäschar nachgeordneten Räumrolle in der Arbeitsposition,
- Fig. 11: die Anordnung nach Fig. 10 beim Zurückstoßen des Arbeitsaggregates,
- Fig. 12: die Draufsicht auf die Einrichtung der Fig. 10 in Richtung des Pfeiles XII gesehen,
- Fig. 13: eine Nebeneinanderanordnung von zwei (oder mehr) Scheibensäscharen nach der Erfindung,
- Fig. 14: eine mit der erfindungsgemäßen Sävorrichtung gekoppelte Arbeitsmaschine,
- Fig. 15: eine weitere Sämaschineneinheit,
- Fig. 16: ein drittes Beispiel einer kompletten Sämaschine,
- Fig. 17: die Kombination einer Säeinrichtung nach der Erfindung mit einer Bodenbearbeitungsmaschine in einer ersten Ausführung,
- Fig. 18: eine zweite Ausführung einer kombinierten Bodenbearbeitungs- und Sämaschine und
- Fig. 19: schließlich eine dritte Variante einer solchen gekoppelten Bodenbearbeitungs- und Sämaschine.

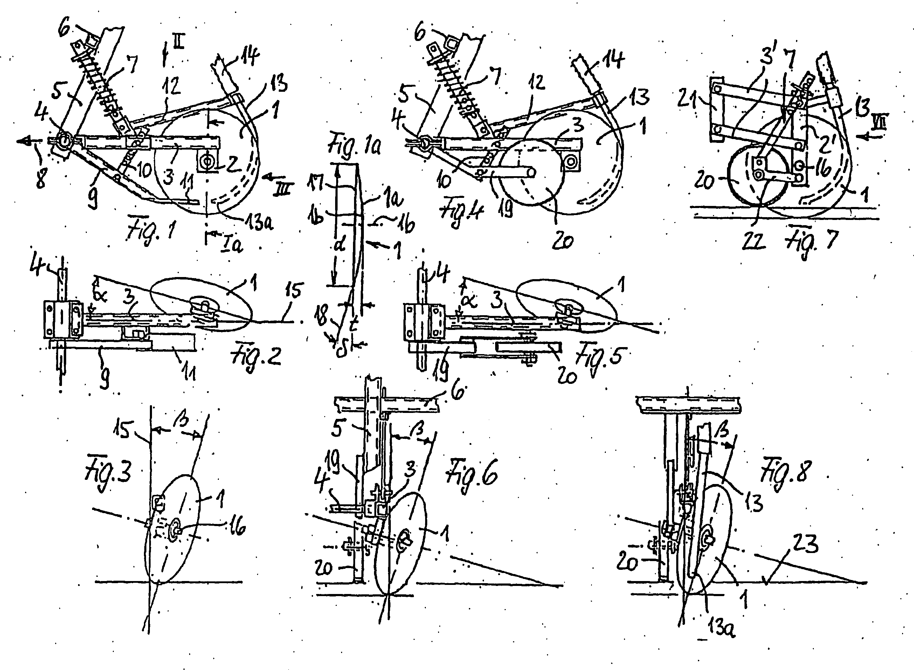

Die Figuren 1 bis 3 einschließlich der Fig. 1a lassen erkennen, daß eine gewölbte Scheibe 1 mit Hilfe eines Achshalters 2 schwenk- und neigbar am hinteren Ende eines Zugholmes 3 befestigt ist, der etwa parallel zum Boden verläuft und an seinem von der Scheibe 1 abgewandten Ende schwenkbar an einer Achse 4 eines nicht näher gezeigten Rahmengestelles angeordnet ist, von dem ein Holmende 5 und ein Querträger 6 zu erkennen ist. Der Zugholm 3 ist durch eine an sich bekannte Druckfederanordnung 7 belastet, die mit ihrem oberen Ende im Bereich des Trägers 6 gelenkig am Rahmengestell angeordnet ist und unten auf den Zugholm 3 einwirkt. An der Welle 4, die quer zur Fahrtrichtung 8 durch das Rahmengestell verläuft, ist auch eine Tiefenbegrenzungskufe 9 angeordnet, die sich am Zugholm 3 über einen in seiner Länge verstellbaren Arm 10 abstützt. Die Tiefenbegrenzungskufe 9 ist an ihrem unteren auf dem Boden aufliegenden Ende mit einer verbreiterten Platte 11 versehen. Sie wird so eingestellt, daß die gewölbte Scheibe beim Betrieb um das gewünschte Maß in den Boden einschneidet.

An der Druckfederanordnung 7 ist auch noch ein Haltearm 12 befestigt, der dazu dient, ein Saatleitungsrohr 13 und dessen Zuführungsrohr 14 zu halten.

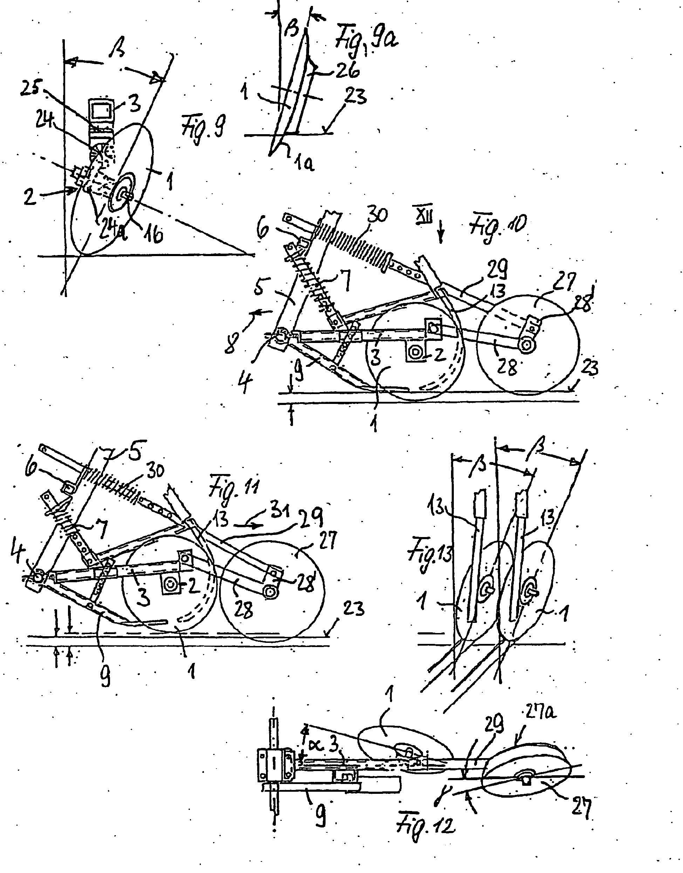

Wie die Fig. 1a zeigt, ist die Scheibe 1 leicht gewölbt und, wie die Fig. 2 und 3 zeigen, sowohl unter einem Anstellwinkel α in der Größenordnung zwischen 10° und 30° zu einer in der Fahrtrichtung verlaufenden Vertikalebene 15 als auch unter einem Neigungswinkel β zu dieser Vertikalebene 15 eingestellt. Sie liegt daher mit ihrer konvexen Außenseite 1a zum Boden geneigt, während die konkave Innenseite 1b während des Betriebes etwas von unten den vom Umfang der Scheibe 1 keilförmig ausgeschnittenen Boden zur Seite räumt.

Beim Ausführungsbeispiel ist der Durchmesser d (Fig. 1a) der Scheibe 1 beispielsweise mit 330mm gewählt. Die Wölbung ist kugelkalottenförmig ausgebildet und die größte Tiefe t im Bereich der Achse 16 der Scheibe 1 beträgt dann beispielsweise 13,5mm. Das Verhältnis der größten Wölbungstiefe t zum Durchmesser d der Scheibe verhält sich daher über wie 1 : 20 und es hat sich gezeigt, daß Scheiben mit einem solchen Wölbungsverhältnis selbst bis 1 : 50 sich besonders gut für die Erfindung eignen. Ihr Vorteil liegt auch darin, daß sie durch eine selbst geringe Bombierungstiefe außerordentlich stabil ist und dadurch sehr dünn gehalten werden kann. Außerdem bleibt ihr angeschärfter Rand dadurch lange und dauernd scharf, bzw. schärft sich von selbst immer gut. Die Bombierungstiefe beträgt bei 1 : 50 und 330mm Durchmesser noch 6,6mm, was bei 3,0mm Scheibendicke, 9,6mm bei einer planebenen Scheibe sein müßte, um die gleiche Stabilität zu erreichen.

Die Scheibe 1 kann an ihrem Umfang auch noch - was nicht näher gezeigt ist - mit einer umlaufenden Schneide versehen sein, damit sie gut in den Boden eindringt. Die Fig. 1a läßt auch erkennen, daß dieser umlaufende Rand der Scheibe 1 eine unter dem Winkel δ zu der Scheibenebene 17 verlaufende Krümmung aufweist, die in die Tangente 18 übergeht. Würde im Betrieb daher der Anstellwinkel α so gewählt, daß α etwa gleich δ ist, dann liegt diese Tangente 18 und damit auch die umlaufende Schneidkante der Scheibe 1 in Fahrtrichtung 8, d.h. auch parallel zur Vertikalebene 15. Der Neigungswinkel β wird etwa in der gleichen Größenordnung gewählt. Er reicht aus, um durch die dann schräg in den Boden eingreifende konkave Seite 1b bzw. deren Randbereich normalerweise einen selbsttätigen Einzug der Scheibe in den Boden zu bewirken, so daß zusätzliche Auflasten für die Saat nicht notwendig sind.

Die Fig. 2 und 3 lassen zudem erkennen, daß auf diese Weise die konvexe Seite 1a der Scheibe 1 zum Boden hin gekippt ist. Die Mündung 13a des Saatleitungsrohres 13 liegt auf dieser konvexen Seite 1a im Bereich des Bodens.

Es ist auch erkennbar und wird anhand der Fig. 9 noch näher erläutert, daß die Achse 16 an der Scheibe 1 einstellbar am hinteren Ende des Zugholmes 3 gehalten ist, so daß der Anstellwinkel α aber auch der Neigungswinkel β in gewissen Grenzen verstellbar ist.

Die Fig. 4 bis 6 entsprechen bezüglich der Scheibe 1 und dem zugeordneten Saatleitungsrohr 13 der Ausführungsform der Fig. 1 bis 3. Unterschiedlich ist lediglich, daß hier nun zur Tiefenbegrenzung keine Gleitkufe, sondern eine Tiefenführungsrolle 20 vorgesehen ist, die an einem Arm 19 gelagert ist, der ähnlich wie schon die Gleitkufe 9 über einen Verbindungsarm 10 an dem Zugholm 3 für die Scheibe 1 abgestützt ist. Durch Einstellung der Länge des Stützarmes 10 kann auch hier (wie auch bei Fig. 1) die Arbeitstiefenverstellung der Scheibe 1 vorgenommen werden.

Ebenso wie bei der Ausführungsform der Fig. 1 bis 3 ist das Saatleitungsrohr 13 der Ausführungsform der Fig. 4 bis 6 in seiner Halterung 12 verdrehbar gehalten, so daß seine Mündung in kleinerem oder größerem Abstand zur konvexen Außenseite 1a eingestellt werden kann. Die Mündung kann auch nach hinten gerichtet und das Saatleitungsrohr 13 vor der Achse 16 zum Boden führend angeordnet sein.

Die Fig. 7 zeigt eine Ausführungsform bei der der Zugholm 3' aus parallel oder viergelenkig zueinander geführten Hebeln besteht, die mit zwei weiteren Hebeln 21 und 2' ein Parallelogramm oder Viergelenk bilden. Der in Fahrtrichtung dabei hinten gelegene Träger 2' ist gleichzeitig als Halter für die Achse 16 der Scheibe 1 ausgebildet und dient zur Abstützung der die Tiefenbegrenzungsrolle 20 haltenden Winkelanordnung 22.

Die Fig. 8 zeigt, daß auch bei dieser Ausführungsform - wie auch bei allen anderen - das Saatleitungsrohr 13 an der konvexen Außenseite der Scheibe 1a vorbeigeführt ist und in der Nähe der Bodenoberfläche 23 mündet.

Die Fig. 9 läßt erkennen, daß die Halterung 2 für die Achse 16 der Scheibe 1 in zwei Richtungen schwenkbar ausgebildet sein kann. Es wird zum einen fest mit dem Zugholm 3 beispielsweise ein waagrecht verlaufender Lagerzapfen 24 vorgesehen, um den sich zur Einstellung des Neigungswinkels ein Achsflansch 24a verschwenken läßt, an dem schwenkbar die Lagerhalterung 2 für die Achse 16 angebracht ist. Das Ganze ist um einen weiteren und vertikal angeordneten Lagerzapfen 25 horizontal drehbar gehalten. Um diese beiden Zapfen 24 und 25 läßt sich daher die Scheiben einstellbar verdrehen, so daß der Neigungswinkel β aber auch der Anstellwinkel α angestellt werden kann.

Die Fig. 9a zeigt schematisch, daß die Scheibe 1 auch ohne Tiefenbegrenzungskufe 9 oder Tiefenbegrenzungsrolle 20 ausgeführt sein kann, wenn sie auf ihrer konvexen Seite 1a mit einem sich konisch von dieser konvexen Seite 1a aus verjüngenden Ringwulst 26 versehen ist, der bei einer Neigung der Scheibe 1 um den Neigungswinkel β in etwa auf der Bodenoberfläche 23 zum Aufliegen kommt.

Die Fig. 10 bis 12 zeigen eine weitere Ausführungsform, bei der dem Aggregat nach den Fig. 1 bis 3, das also mit einer Tiefenbegrenzungskufe 9 arbeitet, noch eine Räumrolle 27 zugeordnet ist, die einen pultdachförmig nach einer Seite abfallenden Laufkranz aufweist - der auch gezackt sein kann - und die mit ihrer kleineren Seite 27a auf der Seite liegt, auf der die Saatrille von der Scheibe 1 gezogen wird. Diese Räumrolle 27 ist nun ebenfalls um einen Winkel γ zur Fahrtrichtung angestellt, der so gewählt ist, daß er in etwa dem Anstellungswinkel α der Scheibe 1 entspricht, aber andersherum liegt. Von dem pultdachförmigen Laufkranz der Räumrolle 27 wird durch diese Anordnung nur ein Teil des aus der ausgeformten Saatrille ausgeworfenen Bodens erfaßt und wieder in das alte Bett zurückgeräumt, während der andere Teil zwischen der Nachbarsaatrille - die von einer zweiten, in Fig. 13 dargestellten Scheibe 1' aufgeworfen ist - locker aufgestreut liegen bleibt und bei der Direktsaat die in diesem Bereich liegende Ausfallgetreidekörner und Unkrautsamen dünn mit Krümelerde überdeckt, was deren sichere und rasche Keimung bewirkt.

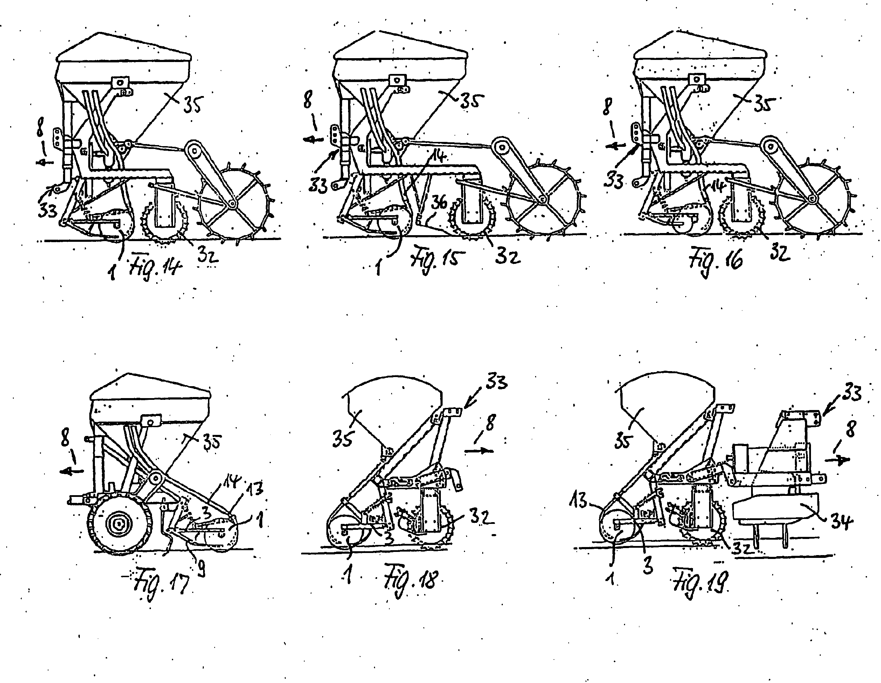

Diese Räumrolle 27 ist am hinteren Ende des Zugholmes über einen schwenkbar gelagerten Hebel 28 mit ihrer Achse angelenkt, wobei dieser Hebel 28 den längeren Hebelarm eines festen Winkelhebels bildet, dessen zweiter kürzerer Hebelarm 28' gelenkig mit der Druckstange 29 einer Druckfederanordnung 30 verbunden ist, die mit ihrem anderen Ende beispielsweise am Querträger 6 des Rahmens 5 befestigt ist. Diese Ausgestaltung bewirkt, daß auch die Räumrolle 27 im Betrieb gegen den Boden gedrückt wird. Sie bringt aber auch noch den aus Fig. 11 ersichtlichen Vorteil mit sich, der im folgenden erläutert wird.

Wenn das an einem nicht dargestellten Arbeitsgerät angekoppelte Säaggregat der Fig. 10 dann, wenn das Arbeitsaggregat unbeabsichtigt zurücksetzt oder beim Zurücksetzen vergessen wird, die Säeinrichtung auszuheben, selbsttätig davor schützt, daß etwa das Saatrohr 13 verstopft.

Fig. 11 zeigt, daß beim Zurücksetzen, also bei einer Bewegung des Aggregates im Sinn des Pfeiles 31 die Druckfederanordnung 30 wegen der entgegen des Pfeiles 31 zurückrollenden Räumrolle 27 ein Drehmoment im Uhrzeigersinn auf den Winkelhebel 28, 28' ausübt, so daß der Winkelhebel 28 ebenfalls im Uhrzeigersinn verschwenkt. Dabei nimmt dieser Hebel aber den Zugholm 3 im Gegenuhrzeigersinn mit, der um seine Schwenklagerung 4 geschwenkt wird. Dadurch wird die Scheibe 1 und mit ihr das Saatrohr 13 und die Tiefenbegrenzungskufe 9 vom Boden abgehoben, so daß ein Verstopfen oder Beschädigen des Saatrohres 13 nicht eintritt.

Die Fig. 13 zeigt, wie vorher schon angedeutet wurde, die Anordnung von zwei der Säscheiben 1 nach der Erfindung nebeneinander. Es können natürlich über die Arbeitsbreite verteilt in einer Reihe mehrere, jeweils gleich ausgerichtete Scheiben in bekannter Weise in einem Rahmen angeordnet werden, so daß ein nach der Erfindung arbeitendes Sägerät sich auch über große Arbeitsbreiten erstrecken kann.

Die Fig. 14 bis 19 zeigen schließlich Beispiele von Arbeitsmaschinen bei denen aufgrund der Erfindung eine besonders vorteilhafte Verknüpfungsmöglichkeit mit Bodenbearbeitungs- und Sämaschinen vorliegt. Die Fig. 17 und 18 stellen dabei eine eigenständig funktionierende kombinierte Bodenbearbeitungssämaschine dar, die besonders geringe Baulänge aufweist. Mit solchen Arbeitsmaschinen können Arbeitsbreiten bis mehr als 6m verwirklicht werden. Es sind Einklapptechniken bekannt, die eine Straßentransportbreite von unter 3m gestatten. Solche kombinierten Maschinen können mit einem sehr großen Saatguttankvolumen 35 ausgerüstet sein, so daß eine große Flächentagesleistung garantiert ist. Die Fig. 19 zeigt dabei eine Sämaschine ähnlich Fig. 18, der allerdings eine Kreiselegge vorgekopppelt ist. Die Fahrtrichtung dieser Maschinen der Fig. 14 bis 19 ist jeweils durch den Pfeil 8 gekennzeichnet. Die Fig. 14, 15 und 16 zeigen rationelle Maschinen, bei denen der erfindungsgemäßen Säeinrichtung jeweils Bodenrückfestigungswalzen 32 nachgeschaltet sind, die den Samenkörnern den nötigen Anschluß an die keimwasserführenden Kapillaren schafft und die Saatbettdecke so strukturiert, daß aus beiden vielfältig und hinlänglich geforderte Vorteile arbeitstechnischer acker- und pflanzenbaulicher sowie ökonomischer Art erwachsen.

Bei der Sämaschine nach Fig. 19, die ebenso wie alle anderen Aggregate jeweils eine Dreipunktkupplung 33 zum Ankoppeln an einen Schlepper o.dgl. aufweist, ist eine Kreiselegge 34 der Säeinrichtung mit einer Bodenrückverfestigungswalze 32 vorgeschaltet. Die Fig. 14 bis 16 zeigen, daß die erfindungsgemäße Säeinrichtung, die in der Fig. 15 auch noch mit einem Saatstriegel 36 versehen ist, der eventuelle Unebenheiten der eingesäten Ackerfläche perfekt einebnet und egalisiert, auch noch mit bekannten Ackerwalzen 32 versehen werden können. Möglich ist es natürlich, die Dreipunktkupplung 33 oder eine zweckentsprechend andersgeformte Koppeleinrichtung dieser Aggregate unmittelbar an einer anderen Arbeitsmaschine, z.B. an oder unter einem Mähdrescher anzubringen, so daß in einem Arbeitsgang geerntet und wieder gesät werden kann.

## Patentansprüche

1. Sägerät mit einem Scheibensäschar (1), das unter einem sich nach oben öffnenden Neigungswinkel (β) und einem horizontalen Anstellwinkel (α) zu einer parallel zur Fahrtrichtung liegenden Vertikalebene angestellt ist, wobei ein Saatleitungsrohr (13) in Bodennähe neben der Scheibensäschar mündet und der Scheibensäschar (1) eine Tiefenbegrenzungseinrichtung (9, 20) zugeordnet ist, wobei das Scheibensäschar aus einer Scheibe (1) besteht, die mindestens im Bereich der Hälfte ihres Radius am Umfang gewölbt und mit ihrer konvexen Seite zum Boden hin so gekippt und angestellt ist, dass die konkave Seite in der Bearbeitungsrichtung liegt, wobei auf der konvexen Außenseite das Saatleitungsrohr (13) mündet, **dadurch gekennzeichnet, dass** das Scheibensäschar (1) an einem im Abstand vor ihrer Achse (16) schwenkbar gelagerten, etwa parallel zum Boden verlaufenden Zugholm (39 angeordnet ist und die Wölbung der Scheibe und der Anstellwinkel (α) so aufeinander abgestimmt sind, dass eine an den Umfang der Scheibe (1) radial angelegte Tangente (18) und eine im Bodeneingriff befindliche vordere Schneidkante der Scheibe (1) in etwa in der Fahrtrichtung liegen, wobei die Scheibe (1) die Form einer Kugelkalotte und ein Verhältnis von Bombierungstiefe zu Scheibendurchmesser von 1:20 bis 1:50 aufweist.

2. Sägerät nach Anspruch 1, **dadurch gekennzeichnet, dass** eine auf den Zugholm (3) einwirkende Federdruckanordnung (7) vorgesehen ist.

3. Sägerät nach Anspruch 1, **dadurch gekennzeichnet, dass** jeder einzelnen Scheibe (1) individuell eine Tiefenbegrenzungseinrichtung in der Form einer der Scheibe vor- oder nachgeschalteten Begrenzungskufe (9) oder eines Tiefenbegrenzungsrades zugeordnet ist.

4. Sägerät nach Anspruch 1, **dadurch gekennzeichnet, dass** jeder einzelnen Scheibe (1) individuell eine Tiefenbegrenzungseinrichtung eines koaxial auf der konvexen Seite der Scheibe (1) angeordneten Wulstes (26) zugeordnet ist, der sich nach außen verjüngt.

5. Sägerät nach Anspruch 1, **dadurch gekennzeichnet, dass** der Anstellwinkel (α) und der Neigungswinkel (β) in der Größenordnung zwischen 10° und 30° liegen.

6. Sägerät nach Anspruch 1, **dadurch gekennzeichnet, dass** zur Einstellung des Anstellwinkels (α) die Scheibe (1) um einen vertikal gestellten Lagerzapfen (25) horizontal schwenkbar angeordnet ist.

7. Sägerät nach Anspruch 1, **dadurch gekennzeichnet, dass** die Scheibe (1) zur Einstellung des Neigungswinkels (β) um einen horizontal gelegenen Zapfen (24) mit Hilfe einer vertikal schwenkbaren Verstelleinrichtung angeordnet ist.

8. Sägerät nach einem der vorhergehenden Ansprüche, **dadurch gekennzeichnet, dass** der Scheibe eine ihre Arbeitsspur tangierende Räumrolle (27) nachgeschaltet ist, die an einem vertikal schwenkbar am hinteren Ende des Zugholmes gelagerten Ausleger (28) angeordnet ist.

9. Sägerät nach Anspruch 8, **dadurch gekennzeichnet, dass** die Räumrolle (27) durch eine sich am Rahmengestell abstützende Druckfedervorrichtung (30) belastet ist, die gleichzeitig den Durchhang der Räumrolle beim Hochheben begrenzt.

10. Sägerät nach Anspruch 9, **dadurch gekennzeichnet, dass** die Räumrolle (27) auf der die Arbeitsspur tangierenden Seite einen kleineren Durchmesser als auf der gegenüberliegenden Seite aufweist und ihre Lauffläche pultdachförmig von der größeren zur kleineren Seite abfallend gezackt oder ungezackt ausgebildet ist.

11. Sägerät nach Anspruch 9, **dadurch gekennzeichnet, dass** die Druckfedervorrichtung (30) am kleineren Hebelarm (28') eines Winkelhebels angreift, der auf der Achse der Räumrolle (27) schwenkbar gelagert ist und mit dem freien Ende des längeren Hebelarmes (28) an dem Zugholm (3) der Scheibe (1) angelenkt ist.

12. Sägerät nach einem der vorangegangenen Ansprüche, **dadurch gekennzeichnet, dass** der Zugholm (3) an einem Rahmen (5) angelenkt ist, der in bekannter Weise Anschlüsse für die Hebeeinrichtung eines Schleppers aufweist.

13. Sägerät nach einem der vorhergehenden Ansprüche, **dadurch gekennzeichnet, dass** sein Rahmen (5) mit einer selbstfahrenden oder mit einer gezogenen Arbeitsmaschine z.B. mit einem Mähdrescher kombinierbar ist.

14. Sägerät nach Anspruch 1, **dadurch gekennzeichnet, dass** wenigstens zwei der Scheiben (1) an einem gemeinsamen Zugholm angeordnet sind, und dass ihnen eine gemeinsame Tiefenbegrenzungseinrichtung zugeordnet ist.

15. Sägerät nach Anspruch 1, **dadurch gekennzeichnet, dass** die kalottenförmigen Scheiben (1) über die Arbeitsbreite zu mehreren nebeneinander in einer Reihe angeordnet sind.

16. Sägerät nach Anspruch 15, **dadurch gekennzeichnet, dass** mehrere Reihen von Scheiben (1) hintereinander gestaffelt so angeordnet sind, dass jeweils die in verschiedenen Reihen laufenden Scheiben auf Lücke zur vorhergehenden Reihe angeordnet sind.

## Claims

1. Seed drill having a disc coulter (1) which is positioned at an upwardly opening angle of inclination (β) and at a horizontal angle of incidence (α) relative to a vertical plane, which is located parallel with the direction of travel, a seed directing pipe (13) opening near the ground beside the disc coulter and a depth limiting device (9, 20) being associated with the disc coulter (1), the disc coulter comprising a disc (1) which is dished at least over half of the radius thereof at the periphery and which is tilted and positioned with the convex side thereof towards the ground in such a manner that the concave side is located in the direction of work, the seed directing pipe (13) opening at the convex outer face, **characterised in that** the disc coulter (1) is arranged on a tension strut (3), which is pivotably supported with spacing in front of the axis (16) of the disc coulter (1) and which extends approximately parallel with the ground, and the curvature of the disc and the angle of incidence (α) are co-ordinated with each other in such a manner that a tangent (18), which is applied radially to the periphery of the disc (1), and the front cutting blade of the disc (1), which cutting blade is engaged with the ground, lie approximately in the direction of travel, the disc (1) having the form of a spherical calotte and a ratio in respect of the depth of camber to the diameter of the disc of from 1 : 20 to 1 : 50.

2. Seed drill according to claim 1, **characterised in that** there is provided a resilient pressure arrangement (7) which acts on the tension strut (3).

3. Seed drill according to claim 1, **characterised in that** a depth limiting device in the form of a limiting runner (9), which is connected upstream or downstream of the disc, or a depth limiting wheel is associated respectively with each individual disc (1).

4. Seed drill according to claim 1, **characterised in that** a depth limiting device of a projection (26), which is arranged coaxially on the convex side of the disc (1) and which tapers outwardly, is associated respectively with each individual disc (1).

5. Seed drill according to claim 1, **characterised in that** the angle of incidence (α) and the angle of inclination (β) are in the order between 10° and 30°.

6. Seed drill according to claim 1, **characterised in that** the disc (1) is arranged to pivot horizontally about a vertically positioned bearing journal (25) in order to adjust the angle of incidence (α).

7. Seed drill according to claim 1, **characterised in that** the disc (1) for adjusting the angle of inclination (β) is arranged about a horizontally positioned trunnion (24) by means of a vertically pivotable adjustment device.

8. Seed drill according to any one of the preceding claims, **characterised in that** a raking roller (27), which is tangential to the working track of the disc and which is arranged on an extension arm (28) which is supported for vertical pivoting at the rear end of the tension strut, is connected downstream of the disc.

9. Seed drill according to claim 8, **characterised in that** the raking roller (27) is loaded by a compression spring apparatus (30) which is supported on the frame and which simultaneously limits the sagging of the raking roller during lifting.

10. Seed drill according to claim 9, **characterised in that** the raking roller (27) has a smaller diameter at the side tangential to the working track than at the opposite side and the bearing surface thereof is constructed in a pent-roof-like manner descending, in a serrated or non-serrated manner, from the larger side to the smaller side.

11. Seed drill according to claim 9, **characterised in that** the compression spring apparatus (30) engages on the smaller lever arm (28') of an elbow lever which is supported pivotably on the axis of the raking roller (27) and which is articulated to the tension strut (3) of the disc (1) by means of the free end of the longer lever arm (28).

12. Seed drill according to any one of the preceding claims, **characterised in that** the tension strut (3) is articulated to a frame (5) which, in known manner, has connections for the lifting device of a tractor.

13. Seed drill according to any one of the preceding claims, **characterised in that** its frame (5) can be combined with a self-propelled or towed piece of machinery, for example, a combine-harvester.

14. Seed drill according to claim 1, **characterised in that** at least two of the discs (1) are arranged on a common tension strut, and **in that** a common depth limiting device is associated therewith.

15. Seed drill according to claim 1, **characterised in that** the calotte-type discs (1) are arranged as a plurality in a row one beside the other over the working width.

16. Seed drill according to claim 15, **characterised in that** a plurality of rows of discs (1) are arranged staggered behind each other in such a manner that the discs, which extend in different rows, are arranged offset relative to the preceding row.

## Revendications

1. Semoir comprenant un soc semeur à disque (1), qui est assemblé selon un angle d'inclinaison (β) ouvert vers le haut et selon un angle d'assemblage (α) horizontal par rapport à un plan vertical situé parallèlement à la direction d'avance, dans lequel un tube de distribution des graines (13) débouche à proximité du sol à côté du soc semeur à disque et le soc semeur à disque (1) est associé à un élément de limitation de profondeur (9, 20), dans lequel le soc semeur à disque est formé par un disque (1), qui est bombé sur sa circonférence au moins d'une valeur dans le domaine de la moitié de son rayon et qui est basculé avec son côté convexe vers le sol et assemblé, de telle sorte que le côté concave est situé dans la direction de travail, le tube de distribution des graines (13) débouchant sur le côté extérieur convexe, **caractérisé en ce que** le soc semeur à disque (1) est disposé contre une poutre de traction (3) parallèle au sol et logé de manière pivotante à une distance donnée de son essieu (16), et la convexité du disque et l'angle d'assemblage (α) sont ajustés l'un à l'autre de telle sorte qu'une tangente (18) radiale à la circonférence du disque (1) et le bord de coupe avant du disque (1) en prise dans le sol sont disposés pratiquement dans la direction d'avance, le disque (1) présentant la forme d'une calotte sphérique et un rapport entre la profondeur de la convexité et le diamètre du disque de 1:20 à 1:50.

2. Semoir selon la revendication 1, **caractérisé en ce qu'**il est prévu un système de ressort de pression (7) agissant sur la poutre de traction (3).

3. Semoir selon la revendication 1, **caractérisé en ce que** chaque disque (1) est associé individuellement à un élément de limitation de profondeur, sous forme de patin de profondeur (9) ou de roue de jauge, disposé à l'avant ou à l'arrière du disque.

4. Semoir selon la revendication 1, **caractérisé en ce que** chaque disque (1) est associé individuellement à un élément de limitation de profondeur formé par un talon (26), qui est disposé sur le côté convexe du disque (1) et qui se rétrécit vers l'extérieur.

5. Semoir selon la revendication 1, **caractérisé en ce que** l'angle d'assemblage (α) et l'angle d'inclinaison (β) sont situés dans un ordre de grandeur compris entre 10° et 30°.

6. Semoir selon la revendication 1, **caractérisé en ce que**, pour le réglage de l'angle d'assemblage (α), le disque (1) est agencé de manière pivotante horizontalement autour d'un tourillon (25) disposé verticalement.

7. Semoir selon la revendication 1, **caractérisé en ce que**, pour le réglage de l'angle d'inclinaison (β), le disque (1) est agencé autour d'un tourillon (24) disposé horizontalement au moyen d'un dispositif de réglage pivotant verticalement.

8. Semoir selon une ou plusieurs des revendications précédentes, **caractérisé en ce qu'**en aval du disque est disposée une roue de nivellement (27) tangente à la trace de travail dudit disque, laquelle est disposée contre un bras (28) logé de manière pivotante verticalement sur l'extrémité arrière de la poutre de traction.

9. Semoir selon la revendication 8, **caractérisé en ce que** la roue de nivellement (27) est sollicitée par un système de ressort de pression (30), qui est en appui contre le châssis et qui limite en même temps la suspension de la roue de nivellement au moment du relevage.

10. Semoir selon la revendication 9, **caractérisé en ce que** la roue de nivellement (27) possède un plus petit diamètre sur le côté tangent à la trace de travail que sur le côté opposé et sa surface de roulement est crantée ou non avec une inclinaison en forme de toit à une pente allant du plus grand vers le plus petit côté.

11. Semoir selon la revendication 9, **caractérisé en ce que** le système de ressort de pression (30) entre en prise avec le bras plus court (28') d'un levier coudé, qui est logé de manière pivotante sur l'essieu de la roue de nivellement (27) et qui est articulé avec l'extrémité libre de son bras plus long (28) contre la poutre de traction (3) du disque (1).

12. Semoir selon une des revendications précédentes, **caractérisé en ce que** la poutre de traction (3) est articulée contre un cadre (5), qui de manière connue comporte des raccords pour le système de relevage d'un tracteur.

13. Semoir selon une des revendications précédentes, **caractérisé en ce qu'**un cadre (5) est combiné avec une machine agricole, telle qu'une moissonneuse-batteuse, automotrice ou tractée.

14. Semoir selon la revendication 1, **caractérisé en ce qu'**au moins deux disques (1) sont disposés contre une poutre de traction commune, et **en ce qu'**ils sont associés à un élément de limitation de profondeur commun.

15. Semoir selon la revendication 1, **caractérisé en ce que** les disques (1) en forme de calotte sont disposés l'un à côté de l'autre, répartis sur une rangée, sur toute la largeur de travail.

16. Semoir selon la revendication 15, **caractérisé en ce que** plusieurs rangées de disques (1), décalées les unes derrière les autres, sont disposées de telle sorte que les disques roulant dans différentes rangées sont disposés dans les intervalles de la rangée précédente.
